# EUROPÄISCHE PATENTANMELDUNG

(11) **EP 0 610 578 A1**
(43) Veröffentlichungstag der Anmeldung: **17.08.1994**
(21) Anmeldenummer: 93120105.7
(22) Anmeldetag: 14.12.1993
(51) Int. Cl.: B05B 15/12

(54) **Pulver-Sprühbeschichtungsanlage**

(30) Priorität: 14.01.1993 DE 4300837
(71) Anmelder: Gema Volstatic AG, CH-9015 St. Gallen (CH)
(72) Erfinder: Dr. Bühlmann, Eugen Thomas, CH-9202 Gossau (CH); Gubler, Roland, CH-9030 Abtwil (CH)
(74) Vertreter: Vetter, Ewald Otto, Dipl.-Ing.

(57) **Zusammenfassung**

Pulver-Sprühbeschichtungsanlage mit einer Kabine (2), mit einer Pulverrückgewinnungseinrichtung (4), die ein Filterband (10) aufweist, welches einen Boden der Kabine bildet und darauffallendes Pulver an eine Übernahmevorrichtung (14) abgibt, und mit einer Absaugeinrichtung (6), welche mittels eines Sauggebläses (52) Luft durch das Filterband hindurch aus der Kabine absaugt und durch einen Abluftfilter (50) in die Umgebung außerhalb der Kabine fördert. Der Abluftfilter (50) ist ein ohne Demontage reinigbarer Filter und mit einer Vorrichtung (56) versehen, durch welche der Filter selbsttätig gereinigt wird.

## Beschreibung

Die Erfindung betrifft eine Pulver-Sprühbeschichtungsanlage nach dem Oberbegriff von Anspruch 1.

Eine solche Anlage ist aus der DE-PS 24 30 517 bekannt. Das Filterband hält mit Ausnahme von feinem Pulverstaub alle Pulverpartikel zurück. Dieser Pulverstaub wird anschließend von einem Abluftfilter zurückgehalten, welcher auf der Saugseite eines Sauggebläses angeordnet ist. Das Filterband kann ein endliches oder ein endloses Filterband sein. Das von ihm zurückgehaltene Pulver wird außerhalb der Kabine von diesem Filterband abgenommen. Die Übertragung des Pulvers vom Filterband auf die abnehmende Pulverübernahmevorrichtung erfolgt vorzugsweise durch Absaugen mittels einer Absaugdüse, wie sie aus der weiteren DE-PS 25 46 920 bekannt ist. Aus der Praxis ist es ferner bekannt, den Abluftfilter stromabwärts statt stromaufwärts des Sauggebläses anzuordnen. Die bekannten Abluftfilter sind sogenannte "Reingasfilter", welche im wesentlichen nur noch reine Luft, jedoch keinen Pulverstaub mehr hindurchlassen. Da das Filterband die überwiegende Filterwirkung leistet, dauert es verhältnismäßig lange, bis der Absolutfilter mit Filterstaub verstopft ist und ausgewechselt werden muß. Für das Auswechseln des Filterelements oder für seine Reinigung von Hand muß der Filter von Hand zerlegt werden und anschließend mit neuem oder gereinigtem Filter wieder zusammengebaut werden.

Ein Nachteil dabei ist jedoch, daß der Luftwiderstand des Abluftfilters mit zunehmender Verstopfung größer wird, wodurch bei gleichbleibender Leistung des Sauggebläses die Saugwirkung oder der in der Kabine gewünschte Unterdruck verringert wird. In der Kabine ist deshalb ein Unterdruck erwünscht, um ein Entweichen von Pulver aus der Kabine zu vermeiden. Die Kabine hat Öffnungen zum Hindurchführen von zu beschichtenden Gegenständen durch die Kabine und zum Einsetzen von Sprühvorrichtungen in die Kabine zur Beschichtung der Gegenstände. Zur Aufrechterhaltung des genannten Unterdruckes oder Vakuums in der Kabine muß deshalb ständig Luft aus ihr durch die Absaugvorrichtung abgesaugt werden. Dadurch entsteht in der Kabine ein Luftstrom in Richtung zum Filterband. Dieser Luftstrom unterstützt zwar den gewünschten Effekt, daß Pulverpartikel nicht an den Kabinenwänden haftenbleiben, hat jedoch den Nachteil, daß der Luftstrom, wenn er zu stark ist, die Pulverpartikel auf dem Flug von der Sprühvorrichtung zu dem zu beschichtenden Gegenstand vom Gegenstand ablenkt und dann das abgelenkte Pulver nicht am Gegenstand haften bleibt, sondern über das Filterband zurückgewonnen werden muß. Aus diesen Gründen ist es wünschenswert, in der Kabine einen Unterdruck aufrecht zu erhalten, mit Mitteln, die den Beschichtungs-Wirkungsgrad nicht beeinträchtigen. Ein wesentlicher Faktor ist hierbei, daß die Luftströmungen in der Kabine nicht stark sein dürfen und nicht schwanken sollten.

Durch die Erfindung soll die Aufgabe gelöst werden, eine Möglichkeit zu schaffen, durch welche in der Kabine ein konstanter Unterdruck ohne störende Luftströmungen aufrechterhalten werden kann und gleichzeitig eine durch einen verstopften Abluftfilter bedingte Betriebsunterbrechung vermieden werden kann.

Diese Aufgabe wird gemäß der Erfindung durch die Kombination der Merkmale von Anspruch 1 gelöst.

Gemäß der Erfindung ist der Abluftfilter ein ohne seine Demontage reinigbarer Filter. Dadurch wird zur Reinigung oder zum Austausch seiner Filterelemente sehr viel Zeit gespart. Ferner ist gemäß der Erfindung eine Vorrichtung zur selbsttätigen Reinigung des Filters vorgesehen. Dadurch kann der Filter selbsttätig in so kurzer Zeit gereinigt werden, daß die Reinigung in Beschichtungsprozeß-Lücken zwischen zwei aufeinanderfolgenden zu beschichtenden Gegenständen ausgeführt werden kann. Ferner ist hierdurch die Möglichkeit gegeben, die Reinigung des Abluftfilters durch ein von Hand ausgelöstes Signal zu starten oder durch ein vom Beschichtungsbetrieb der Sprühbeschichtungsanlage abhängiges Signal oder in Abhängigkeit von seinem Verstopfungszustand zu starten. Ferner ist durch die Erfindung die Möglichkeit gegeben, den Reinigungsvorgang des Abluftfilters automatisch durch ein Betriebsprogramm zu steuern, beispielsweise derart, daß der Abluftfilter während Sprühpausen gereinigt wird, während ein beschichteter Gegenstand von der Sprühvorrichtung weg und ein anderer zu beschichtender Gegenstand vor die Sprühvorrichtung transportiert wird. Ferner ist es auch möglich, den Abluftfilter während Sprühbeschichtungsvorgängen zu reinigen. Vorzugsweise wird der Abluftfilter nur während so kurzer Zeitperioden gereinigt, daß der Sprühvorgang nicht gestört wird. Hierbei soll der Abluftfilter nicht erst dann gereinigt werden, wenn er schon fast verstopft ist, sondern bereits nach einer Teilbelegung mit Pulver teilweise gereinigt werden. Dadurch werden die einzelnen Zeitphasen, die für eine Reinigung erforderlich sind, wesentlich kürzer und der Strömungswiderstand im Abluftfilter wird ungefähr konstant gehalten. Dies steht im Gegensatz zum Stand der Technik, bei welchem der Abluftfilter erst dann gereinigt wird, wenn er einen kritischen Verstopfungsgrad erreicht hat. Vorzugsweise enthält der Abluftfilter eine Vielzahl von Filterelementen. Dies ermöglicht es, die Filterelemente selektiv einzeln oder gruppenweise zu reinigen. Hierbei können beispielsweise stromaufwärts gelegene Filterelemente öfter gereinigt werden als stromabwärts gelegene Filterelemente. Ferner ist es hierbei möglich, die Filterelemente einzeln oder gruppenweise nacheinander in einer bestimmten Reihenfolge zu reinigen.

Das Sauggebläse ist vorzugsweise stromabwärts des Abluftfilters angeordnet.

Eine bevorzugte Ausführungsform der Erfindung besteht darin, daß die Reinigungsvorrichtung während der Reinigungsphase einen Gegenluftstrom, vorzugsweise Gegenluftstöße erzeugt, welcher oder welche den Filter entgegengesetzt zum Abluftstrom auf dem gleichen Wege wie dieser Luftabsaugstrom durchströmt. Dabei muß der Gegenluftstrom oder müssen die Gegenluftstöße stärker als der Abluftstrom aus der Kabine sein, damit der Gegenluftstrom oder die Gegenluftstöße das Pulver von den Filterelementen wegblasen. Anstelle eines Gegenluftstromes oder anstelle von Gegenluftstößen, oder gleichzeitig dazu, kann ein Vibrator vorgesehen sein, welcher den Filter oder mindestens seine Filterelemente vibriert und dadurch an ihm oder an ihnen haftendes Pulver abgeschüttelt wird.

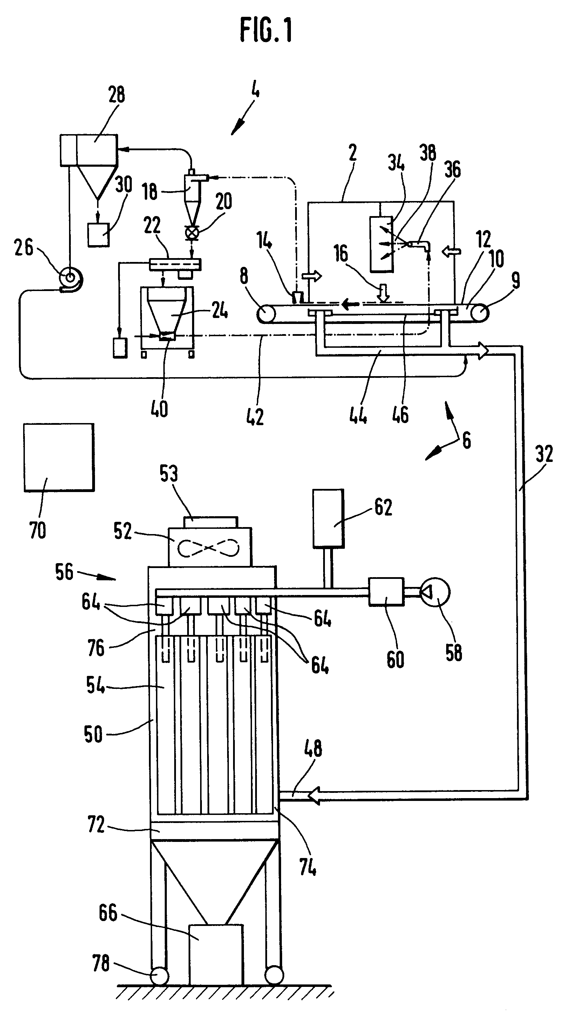

Die Erfindung wird im folgenden mit Bezug auf die Zeichnung anhand einer bevorzugten Ausführungsform als Beispiel beschrieben. in der Zeichnung zeigt
- Fig. 1: eine Pulver-Sprühbeschichtungsanlage mit einer Kabine gemäß der Erfindung.

Die in Fig. 1 dargestellte Sprühbeschichtungsanlage enthält eine Kabine 2, eine Pulverrückgewinnungseinrichtung 4 und eine Absaugvorrichtung 6 zum Absaugen von Luft aus der Kabine 2. Die Pulverrückgewinnungseinrichtung 4 weist ein um Rollen 8 und 9 umlaufendes endloses Filterband 10 auf, deren oberes Trum 12 mindestens teilweise den Boden der Kabine 2 bildet und in der Kabine darauffallendes Pulver auffängt und anschließend an eine Pulverübernahmevorrichtung 14 der Pulverrückgewinnungseinrichtung 4 übergibt. Bei der dargestellten Ausführungsform ist die Übernahmevorrichtung 14 eine Saugdüse. Bei anderen Ausführungsformen kann zusätzlich oder anstelle der Saugdüse 14 eine Blasdüse, Bürsten, Vibrator oder anderes Element vorgesehen sein.

Das Filterband 10 fördert das in der Kabine daraufgefallene Pulver 16 aus der Kabine 2 heraus. Das Pulver wird von der außerhalb der Kabine 2 angeordneten Saugdüse 14, welche sich über die ganze Filterbandbreite erstreckt, abgesaugt und zu einem Zyklon 18 gefördert. Im Zylkon 18 wird das Pulver von der Förderluft getrennt. Vom Zylkon 18 fällt das Pulver durch eine Zellenradschleuse 20 in eine Siebmaschine 22 und dann in einen Pulverbehälter 24. Der für die Pulverförderung benötigte Unterdruck in der Saugdüse 14 wird von einem Gebläse 26 erzeugt. Die leicht pulverhaltige Förderluft wird in einem Filter 28 mit automatischer Filterreinigung gefiltert, welche im Strömungsweg zwischen dem Mini-Zyklon 18 und dem Gebläse 26 angeordnet ist. Vom Filter 28 fällt das ausgesiebte Pulver in einen Auffangbehälter 30. Das Gebläse 26 fördert die vom Filter 28 gereinigte Luft in eine Absaugleitung 32. Eine abgewandelte Ausführungsform kann darin bestehen, daß das Gebläse 26 die gereinigte Luft in die Außenumgebung oder in die Kabine 2 zurückfördert.

Die zu beschichtenden Gegenstände 34 werden in der Kabine 2 mittels einer oder mehrerer Sprührvorrichtungen 36 mit Pulver 38 beschichtet, welches Frischpulver oder zurückgewonnenes Pulver oder eine Mischung von beiden Pulverarten sein kann. Das Pulver 38 wird der Sprühvorrichtung aus dem Pulverbehälter 24 durch einen Injektor 40 oder eine andere Pneumatikpumpe und dann durch eine Leitung 42 pneumatisch zugeführt. Die Sprühvorrichtung 36 lädt das Pulver 38 vor oder nach dem Versprühen elektrostatisch auf, damit es von dem geerdeten zu beschichtenden Gegenstand 34 elektrostatisch angezogen wird.

Die Absaugleitung 32 gehört zur Absaugvorrichtung 6 und ist an ihrem stromaufwärtigen Anfang 44 an eine Saugwanne 46 und mit ihrem stromabwärtigen Ende 48 an einen Abluftfilter 50 angeschlossen. Die Saugwanne 46 erstreckt sich über den gesamten Abschnitt des oberen Filterbandtrums 12, welcher einen Boden der Kabine 2 bildet. Anstelle einer Saugwanne 46 könnte auch eine oder mehrere Saugdüsen vorgesehen sein. Der Abluftstrom von der Kabine 2 durch die Absaugleitung 32 und dann durch den Filter 50 wird von einem Abluftgebläse 52 erzeugt, welches auf dem Filter 50 angeordnet ist und die von Pulverpartikeln und Pulverstaub gereinigte Abluft über einen Auslaß 53 in die Umgebung außerhalb der Kabine 2 fördert.

Der Filter 50 enthält eine Vielzahl von Filterelementen 54, welche ohne Demontage des Filters 50 gereinigt werden können. Für die Reinigung der Filterelemente 54 ist eine Reinigungsvorrichtung 56 vorgesehen, welche eine Druckluftquelle 58, einen Druckregler 60 und einen Windkessel 62 sowie eine Vielzahl von steuerbaren Ventilen 64 aufweist. Der Windkessel 62 ermöglicht es, auch mit einer kleinen Druckluftquelle 58 eine große Menge Druckluft für kurze starke Druckluftstöße zur Verfügung zu stellen, welche über die steuerbaren Ventile 64 in die Filterelemente 54 gelangen und Pulver von ihnen abblasen. Das abgeblasene Pulver fällt in einen weiteren Behälter 66, welcher unter den Filterelementen 54 steht. Bei dem dargestellten Ausführungsbeispiel ist angenommen, daß die Filterelemente 54 sogenannte Filterplatten oder Filterkerzen sind, welche von dem mit Pulverstaub beladenen Abluftstrom der Absaugleitung 32 von außen nach innen durchströmt werden. Die Druckluft der steuerbaren Ventile 64 hat einen höheren Druck als der Abluftstrom, so daß die Druckluft der Druckluftquelle 58 auch während Sprühbeschichtungsvorgängen entgegen dem Abluftstrom gegen die Filterelemente 54 gefördert werden kann. Dadurch können die Filterelemente 54 auch während des Sprühbeschichtungsbetriebes gereinigt werden. Die steuerbaren Ventile 64 sind elektrisch an eine Steuereinrichtung 70 angeschlossen, durch welche die Ventile 64 selektiv oder einzeln nacheinander oder gruppenweise geöffnet und geschlossen werden können. Jedem Ventil 64 ist mindestens ein Filterelement 54 zugeordnet, so daß diese entsprechend selektiv oder nacheinander je einzeln oder gruppenweise gereinigt werden können.

Zum Lösen von Filterpartikeln und Filterstaub von den Filterelementen 54 kann zusätzlich zu der Druckluftquelle 58 und dem Windkessel 62 oder anstelle dieser Druckluftelemente ein Vibrator 72 vorgesehen sein, mit welchem die Filterelemente 54 so vibriert werden, daß Pulverpartikel und Pulverstaub von ihnen abgeschüttelt werden und in den zweiten Behälter 66 fallen.

Die Reinigung des Filters 50 kann von Hand gestartet werden und läuft dann automatisch ab. Ferner ist es möglich, die Filterreinigung in Abhängigkeit von bestimmten Betriebskriterien der Sprühbeschichtungsanlage zu starten und in Abhängigkeit von solchen Kriterien durchzuführen, beispielsweise zeitlich zu begrenzen oder auf einige wenige Filterelemente 54 selektiv zu beschränken. Gemäß einer besonderen Ausführungsform ist es auch möglich, die Reinigung des Filters 50 in Abhängigkeit von der Druckluftdifferenz am Filtereingang 74 und am Filterausgang 76 zu steuern und zu starten.

Ein besonderer Vorteil eines selbsttätig reinigenden Filters 50 gegenüber einem nicht reinigbaren oder von Hand zu reinigenen Filter besteht darin, daß der Luftdruck in der Kabine 2 konstant gehalten werden kann. Ein weiterer wichtiger Vorteil besteht darin, daß das Filterband 10 eine höhere Durchlässigkeit haben kann und damit aus einem weniger teuren Material bestehen kann als bei bekannten Anlagen, weil das vom Filterband 10 durchgelassene Pulver oder der durchgelassene Pulverstaub im Filter 50 aus dem Abluftstrom ausgeschieden wird, ohne daß der Beschichtungsbetrieb in der Kabine 2 gestört wird oder unterbrochen werden muß.

Der Filter 50 kann auf Rollen 78 vom Behälter 66 weggefahren werden. Dadurch kann der Filter 50 schnell gegen einen anderen Filter ausgetauscht werden. Bei der dargestellten bevorzugten Ausführungsform sind auch die Filterelemente 54 einzeln austauschbar.

## Patentansprüche

1. Pulver-Sprühbeschichtungsanlage mit einer Kabine (2), mit einer Pulverrückgewinnungseinrichtun (4), die ein Filterband (10) aufweist, welches mindestens einen Teil eines Bodens der Kabine bildet und in der Kabine darauffallendes Pulver auffängt und anschließend an eine Pulverübernahmevorrichtung (14) abgibt, und mit einer Absaugvorrichtung (6), welche mittels eines Sauggebläses (52) Luft durch das Filterband hindurch aus der Kabine absaugt und durch einen Abluftfilter und dann in die Umgebung außerhalb der Kabine fördert,
**dadurch gekennzeichnet,** daß
der Abluftfilter (50) ein ohne seine Demontage reinigbarer Filter ist und daß eine Vorrichtung (56) zur selbsttätigen Reinigung des Filters (50) vorgesehen ist.

2. Pulver-Sprühbeschichtungsanlage nach Anspruch 1,
**dadurch gekennzeichnet,** daß
der Abluftfilter (50) eine Vielzahl von Filterelementen (54) aufweist, welche von der Reinigungsvorrichtung (56) selektiv einzeln oder gruppenweise gereinigt werden.

3. Pulver-Sprühbeschichtungsanlage nach Anspruch 1,
**dadurch gekennzeichnet,** daß
der Abluftfilter (50) eine Vielzahl von Filterelementen (54) aufweist, welche von der Reinigungsvorrichtung (56) einzeln oder gruppenweise nacheinander gereinigt werden.

4. Pulver-Sprühbeschichtungsanlage nach einem der Ansprüche 1 bis 3,
**dadurch gekennzeichnet,** daß
ein Sauggebläse (52) zur Erzeugung des Abluftstromes der Absaugvorrichtung (6) stromabwärts des Abluftfilters (50) angeordnet ist.

5. Pulver-Sprühbeschichtungsanlage nach einem der Ansprüche 1 bis 4
**dadurch gekennzeichnet,** daß
die Reinigungsvorrichtung (56) einen Gegenluftstrom erzeugt, welcher den Filter (50) auf dem Weg des Abluftstromes entgegengesetzt durchströmt.

6. Pulver-Sprühbeschichtungsanlage nach einem der Ansprüche 1 bis 4,
**dadurch gekennzeichnet,** daß
die Reinigungsvorrichtung (56) einen Gegenluftstoß oder mehrere unmittelbar aufeinanderfolgende kurze Gegenluftstöße erzeugt, deren Druckluft den Filter (50) entgegengesetzt zum Abluftstrom durchströmt.

7. Pulver-Sprühbeschichtungsanlage nach einem der Ansprüche 1 bis 6,
**dadurch gekennzeichnet,** daß
die Reinigungsvorrichtung (56) einen Vibrator (72) aufweist, welcher den Filter (50) vibriert und dadurch an ihm haftendes Pulver abschüttelt.

8. Pulver-Sprühbeschichtungsanlage nach einem der Ansprüche 1 bis 7,
**dadurch gekennzeichnet,** daß
das Filterband (10) ein endloses, umlaufendes Filterband ist, welches ein den Kabinenboden mindestens teilweise bildendes oberes Trum (12) und einen aus der Kabine (2) herauslaufenden Abschnitt aufweist, von welchem die Übernahmevorrichtung (14) Pulver übernimmt.

9. Pulver-Sprühbeschichtungsanlage nach einem der Ansprüche 1 bis 8,
**dadurch gekennzeichnet,** daß
die Reinigung des Filters (50) in Abhängigkeit von einem automatisch erzeugten Signal (70) gestartet und/oder geregelt wird.
